# EUROPÄISCHE PATENTSCHRIFT

(11) **EP 4 368 278 B1**
(45) Veröffentlichungstag und Bekanntmachung des Hinweises auf die Patenterteilung: **21.01.2026**
(21) Anmeldenummer: 23208478.0
(22) Anmeldetag: 08.11.2023
(51) Int. Cl.: B01D 53/46, B01D 53/68, B01J 19/24

(54) **VORRICHTUNG UND VERFAHREN ZUM ABREINIGEN EINES MINDESTENS EIN SCHADGAS ENTHALTENDEN PROZESSGASES**
DEVICE AND METHOD FOR CLEANING A PROCESS GAS CONTAINING AT LEAST ONE POLLUTANT GAS
DISPOSITIF ET PROCÉDÉ DE NETTOYAGE D'UN GAZ DE PROCESSUS CONTENANT AU MOINS UN GAZ NOCIF

(30) Priorität: 11.11.2022 DE 102022212009
(43) Veröffentlichungstag der Anmeldung: 15.05.2024
(73) Patentinhaber: EBARA Precision Machinery Europe GmbH, 01108 Dresden (DE)
(72) Erfinder: Venus, Christian, 01108 Dresden (DE); Kumichel, Peter Raffael, 01108 Dresden (DE); Rothe, Philipp, 01108 Dresden (DE); Leonhardt, Sven, 01108 Dresden (DE); Salomo, Martin, 01108 Dresden (DE)
(74) Vertreter: Pfenning, Meinig & Partner mbB

(56) Entgegenhaltungen:
- EP-A1- 1 023 932
- EP-A1- 3 254 745
- CN-A- 102 049 183
- US-A1- 2003 054 299
- US-A1- 2010 064 891

## Beschreibung

Die vorliegende Erfindung betrifft eine Vorrichtung und ein Verfahren zum Abreinigen eines mindestens ein Schadgas enthaltenden Prozessgases.

Pyrophore und bzw. oder giftige Gase, die unter anderem auch zur globalen Erwärmung beitragen, werden zwar bei verschiedenen chemischen Prozessen generiert, müssen allerdings aufgrund ihrer schädlichen Eigenschaften oftmals aufwändig behandelt und möglichst unschädlich gemacht werden. Aus dem Stand der Technik sind hierzu verschiedene Lösungen bekannt:
DE 20 2005 021 057 U1 offenbart ein Gasschadstoff-Abbau-System als Brenner-Wäscher-System für reagierende Gase, bei dem in einem Brennraum die benötigte Temperatur erzeugt wird, die zum (Ab-)Reagieren derartiger Gase notwendig ist. Nachteilig hieran sind die hohen Anschaffungs- und, bedingt durch die energieintensive Behandlung, auch hohen Unterhaltskosten eines derartigen Systems.

Aus EP 1 070 532 A1 ist ein Strömungsabscheidesystem mit Mischkammern bekannt, das eine aufwändig gestaltete Mischkammer mit innenliegenden Rohren, Einlässen und Kanälen aufweist, was kompliziert und damit teuer in der Herstellung ist und nur auf eine relativ begrenzte Zahl von Anwendungsfällen anwendbar ist. EP 1 129 763 A1 offenbart ein weiteres System, bei dem Wasser in einen Gasstrom eingeleitet wird bzw. der Gasstrom mit vorgewärmter Luft gemischt wird. Auch dieses System weist einen komplizierten Aufbau auf, wodurch auch die mit einem solchen System durchgeführten Verfahren kompliziert sind und einer teuren Steuerung bedürfen.

US 2003/0054288 A1 offenbart ein System zur Abgasbehandlung, bei dem Gas in einer Brennvorrichtung verbrannt wird. Aus EP 3 254 745 A1 ist eine Vakuumpumpe bekannt, mit der Schadgas unschädlich gemacht werden kann.

CN 102 049 183 A offenbart eine Vorrichtung zum Behandeln von pyrophorem Gas mit einem Zyklon. Ebenso offenbart auch EP 1 023 932 A1 eine Vorrichtung zum Reinigen von Gas mittels eines Zyklons.

Der vorliegenden Erfindung liegt daher die Aufgabe zugrunde, eine Vorrichtung und ein Verfahren vorzuschlagen, das die genannten Nachteile vermeidet, mit dem also ein Schadgas in effizienter Weise unschädlich gemacht werden kann.

Diese Aufgabe wird erfindungsgemäß gelöst durch eine Vorrichtung und ein Verfahren nach den unabhängigen Ansprüchen. Vorteilhafte Ausgestaltungen und Weiterbildungen sind in den abhängigen Ansprüchen beschrieben.

Eine Vorrichtung zum Abreinigen bzw. Unschädlichmachen eines mindestens ein Schadgas enthaltendes Prozessgas (wobei das Prozessgas selbst auch das Schadgas sein kann), weist ein als Fliehkraftabscheider ausgebildetes Reaktorgefäß auf, das einen zylinderförmigen bzw. hohlzylinderförmigen Bereich und einen sich verjüngenden Bereich aufweist. Durch mindestens einen, an dem zylinderförmigen Bereich angeordneten Gaseinlass ist Sauerstoff oder ein Sauerstoff enthaltendes Gas als Reaktionsgas in das Reaktorgefäß einführbar und durch mindestens einen, an dem sich verjüngenden Bereich angeordneten Gasauslass aus dem Reaktorgefäß abführbar. Der mindestens eine Gaseinlass ist angeordnet und ausgebildet, einen definierten Volumenstrom des Reaktionsgases tangential zu einer Mantelfläche des zylinderförmigen Bereichs in das Reaktorgefäß einzuleiten. An dem zylinderförmigen Bereich ist außerdem ein Schadgaseinlass angeordnet, der ausgebildet ist, einen definierten Volumenstrom des mindestens ein Schadgas enthaltenden Prozessgases in das Reaktorgefäß einzuleiten, so dass das mindestens eine Schadgas und das Reaktionsgas in Richtung des Gasauslasses miteinander vermischt werden und auf dem Weg durch das Reaktorgefäß miteinander chemisch reagieren. Der Gasauslass ist angeordnet und ausgebildet, nicht bei der chemischen Reaktion umgesetztes Prozessgas und Reaktionsprodukte der chemischen Reaktion aus dem Reaktorgefäß abzuleiten.

Durch diese Vorrichtung wird ein einfacher Aufbau eines Reaktors ermöglicht, wobei durch das definierte Einleiten der verschiedenen Gase eine reproduzierbare und nachweisbare chemische Reaktion ermöglicht wird. Durch den Aufbau als Fliehkraftabscheider (der auch als Zyklon, Zyklonabscheider oder Wirbler bezeichnet wird), wird nicht nur ein zuverlässiges Ansaugen der an der chemischen Reaktion beteiligten Gase und deren Weiterleiten in Richtung des Gasauslasses ermöglicht, sondern bedingt durch die Anordnung des Gaseinlasses auch ein strömungsoptimierter Aufbau gewährleistet, bei dem typischerweise eine sofortige bzw. vollständige Vermischung der Gase und nicht nur eine reine Verdünnung das Schadgases erreicht. Vereinfacht ausgedrückt wird die Vorrichtung bzw. ein damit durchgeführtes Verfahren und deren Verwendung optimiert und eine kontrollierte und sichere Reaktion bzw. Oxidation ermöglicht, die Umwelt und Umgebung schützt und die Kosten für diesen Prozess gegenüber dem Stand der Technik reduziert. Gleichzeitig wird ein verbessertes Produkt erzielt, d. h. anstelle einer Verdünnung tritt die tatsächliche Reaktion des Schadgases und damit eine Reduzierung des Schadgasausstosses. Somit ist es möglich, die Reaktionsprodukte hinsichtlich ihrer Reinheit zu selektieren und wiederzuverwenden.

Zum Einstellen des definierten Volumenstroms ist vorgesehen, dass die Vorrichtung eine Einrichtung zur Einstellung des definierten Volumenstroms aufweist, durch die der definierte Volumenstrom des mindestens ein Schadgas enthaltenden Prozessgases und der definierte Volumenstrom des Reaktionsgases vor dem Einführen in das Reaktorgefäß einstellbar sind. Typischerweise beträgt dieser Volumenstrom zwischen 300 m³/hr und 2600 m³/hr, vorzugsweise zwischen 600 m³/hr und 1300 m³/hr. Alternativ oder zusätzlich kann die Vorrichtung auch einen Verdichter umfassen, um das Prozessgas und bzw. oder das Reaktionsgas in einen Innenraum des Reaktorgefäßes einzubringen.

An dem Gasauslass oder in dem Gasauslass kann ein Temperatursensor vorgesehen sein, um eine Temperatur der, typischerweise exothermen, chemischen Reaktion in dem Reaktorgefäß zu erfassen. Die ermittelte Temperatur kann an die Einrichtung zur Einstellung eines Volumenstroms weitergeleitet werden, um den definierten Volumenstrom entsprechend nachzujustieren, so dass eine Steuerung bzw. gegebenenfalls auch eine Regelung der Reaktion erfolgen kann. Typischerweise ist dieser Temperatursensor mittig in dem Gasauslass angeordnet.

Alternativ oder zusätzlich kann ein Strömungsgeschwindigkeitssensor in dem Gaseinlass oder an dem Gaseinlass und bzw. oder in dem Schadgas oder an dem Schadgaseinlass angeordnet sein. Die ermittelte Strömungsgeschwindigkeit des jeweiligen Gases kann ebenfalls an die Einrichtung zur Einstellung eines Volumenstroms übermittelt werden und als Steuerparameter bzw. Regelparameter verwendet werden.

Um zum Abreinigen eine Oxidation durchzuführen, kann neben Sauerstoff insbesondere auch ein Umgebungsluftgemisch als Sauerstoff enthaltendes Reaktionsgas verwendet werden, was den gesamten Prozess einfacher durchführbar macht.

Zum Unterstützen der chemischen Reaktion kann eine Heizeinrichtung in dem Reaktorgefäß oder an dem Reaktorgefäß angeordnet sein. Diese Heizeinrichtung ist vorzugsweise als elektrische Widerstandsheizung ausgeführt und kann gegebenenfalls ebenfalls von der Einrichtung zur Einstellung eines Volumenstroms gesteuert bzw. geregelt werden.

Das Reaktorgefäß selbst ist typischerweise aus Edelstahl gefertigt, wobei in der Regel für den Gaseinlass, den Gasauslass bzw. den Schadgasauslass normierte Standardrohre und ISO-Flansche verwendet werden, um den Aufbau einfach zu halten und kostengünstig zu gestalten. Das Reaktorgefäß ist typischerweise auf den Gaseinlass, den Gasauslass bzw. den Schadgasauslass geschlossen, d. h. gasdicht bzw. fluiddicht ausgestaltet.

Der Schadgaseinlass ist an einer Stirnseite, d. h. an der kreisförmigen Oberfläche des zylinderförmigen Bereichs, angeordnet, um eine direkte Vermischung mit dem tangential einströmenden Reaktionsgas zu gewährleisten.

Der sich verjüngende Bereich ist typischerweise als sich konisch verjüngender Bereich ausgestaltet. Die Verjüngung kann aber prinzipiell auch mit einer Polynomfunktion und einem sich daraus ergebenden Rotationskörper beschrieben werden.

Der Gasauslass ist in der Regel bogenförmig gekrümmt ausgebildet, um eine definierte Geometrie zum reinen Ableiten des sich im Innenraum des Reaktorgefäßes befindlichen Gasgemischs bereitzustellen. Vorzugsweise ist der Gasauslass um 90° bogenförmig gekrümmt ausgebildet.

Der Schadgaseinlass ist dem Gasauslass gegenüberliegend angeordnet. Der Schadgaseinlass ist so ausgebildet, dass das Schadgas rotationssymmetrisch zu einer Längsachse des Gasauslasses, in der Regel zu einer Mittelachse des Gasauslasses, in das Reaktorgefäß eingeleitet wird.

An dem Gasauslass kann abnehmbar anbringbar, d. h. abnehmbar und bzw. oder anbringbar, ein Filterelement zum Filterelement, ein Wäscher und bzw. oder ein Auffangbehälter für Reaktionsprodukte angeordnet sein, um die Reaktionsprodukte sicher auffangen und entfernen zu können.

Als Schadgase können in besonders vorteilhafter Weise Silane und bzw. oder Diborane mit der beschriebenen Vorrichtung behandelt werden.

Eine typische Verweilzeit des Schadgases in dem Reaktorgefäß beträgt zwischen 0,3 Sekunden und 5,0 Sekunden, bevorzugt sind 0,7 Sekunden bis 2,0 Sekunden als Verweilzeit. Typische Prozesstemperaturen können im Bereich von 20 °C bis 300 °C, vorzugsweise 40 °C bis 200 °C, liegen.

Bei einem Verfahren zum Abreinigen eines mindestens ein Schadgas enthaltenden Prozessgases wird in ein als Fliehkraftabscheider ausgebildetes Reaktorgefäß, das einen zylinderförmigen Bereich und einen sich verjüngenden Bereich aufweist, über mindestens einen, an dem zylinderförmigen Bereich angeordneten Gaseinlass ein definierter Volumenstrom von Sauerstoff oder eines Sauerstoff enthaltenden Gases als Reaktionsgas tangential zu einer Mantelfläche des zylinderförmigen Bereichs in das Reaktorgefäß eingeleitet. Über einen an dem zylinderförmigen Bereich angeordneten Schadgaseinlass wird ein definierter Volumenstrom des das Schadgas enthaltenden Prozessgases in das Reaktorgefäß eingeleitet, wobei das Schadgas und das Prozessgas miteinander vermischt werden, auf dem Weg durch das Reaktorgefäß miteinander chemisch reagieren und durch den Gasauslass aus dem Reaktorgefäß nicht bei der chemischen Reaktion umgesetztes Prozessgas und Reaktionsprodukte der chemischen Reaktion abgeleitet werden. Der Schadgaseinlass ist an einer Stirnseite des zylinderförmigen Bereichs des Reaktorgefäßes angeordnet und der Schadgaseinlass ist dem Gasauslass gegenüberliegend angeordnet und ausgebildet, das Schadgas rotationssymmetrisch zu einer Längsachse des Gasauslasses in das Reaktorgefäß einzuleiten.

Das beschriebene Verfahren kann mit der beschriebenen Vorrichtung durchgeführt werden, d. h. die beschriebene Vorrichtung ist zum Durchführen des beschriebenen Verfahrens eingerichtet.

Ausführungsbeispiele der Erfindung sind in den Zeichnungen dargestellt und werden nachfolgend anhand der Figuren 1 bis 4 erläutert. Es zeigen:
- Fig. 1: eine schematische seitliche Ansicht einer Vorrichtung zum Abreinigen eines mindestens ein Schadgas enthaltenden Prozessgases;
- Fig. 2: eine gegenüber Figur 1 um 90° gedrehte Ansicht der Vorrichtung;
- Fig. 3: einen schematischen Strömungsverlauf durch die Vorrichtung entsprechend der Figuren 1 und 2; und
- Fig. 4: einen schematischen Strömungsverlauf in perspektivischer Ansicht.

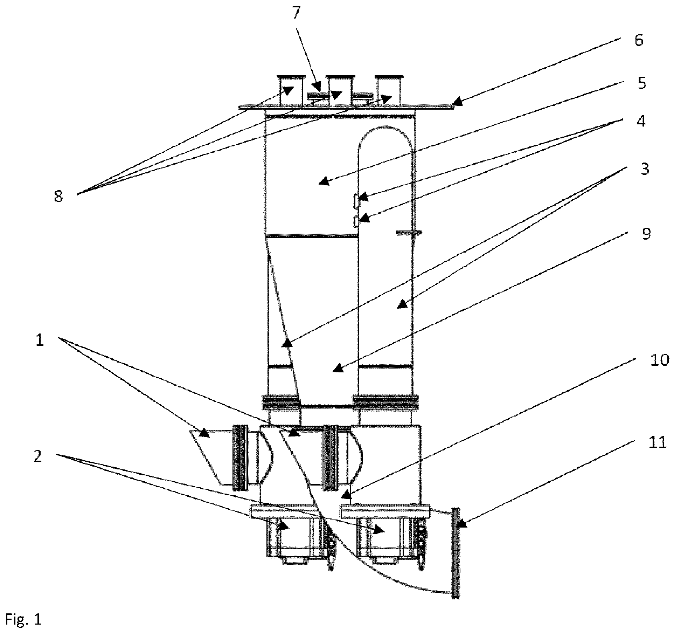

Figur 1 zeigt in einer schematischen seitlichen Ansicht ein Ausführungsbeispiel einer Vorrichtung zum Abreinigen eines mindestens ein Schadgas enthaltenden Prozessgases. Umgebungsluft als Reaktionsgas kann über einen oder mehrere Ansaug- bzw. Einlassstutzen 1 in die Vorrichtung einströmen. Von den Einlassstutzen 1 aus strömt das Reaktionsgas über Eckventile 2 durch eine oder mehrere Einströmröhren 3 und an Messanschlüssen vorbei durch einen Bogen zu Umgebungsgasgemischanschlüssen 12. Die Einlassstutzen 1, die Eckventile 2 und die Einströmröhren 3 samt Umgebungsgasgemischanschlüssen 12 den bilden somit die Gaseinlässe in das Reaktorgefäß, dass einen hohlzylinderförmigen Bereich 5 und einen sich konisch verjüngen Bereich 9 aufweist. An den Einströmröhren 3 können auch Messanschlüsse für verschiedene Messgeräte angeordnet sein.

Die Umgebungsgasgemischanschlüsse 12 sind tangential am hier geraden, d. h. zylinderförmigen Bereich 5 des als Zyklon bzw. Fliehkraftabscheider ausgebildeten Reaktorgefäßes angeordnet. Oberhalb des zylindrischen Bereichs 5 des Reaktorgefäßes wird das Reaktorgefäß durch eine Reaktorplatte 6 bzw. einen Reaktordeckel gasdicht abgeschlossen, an der mehrere Schadgaseinlässe 8 angeordnet sind. In dem in Figur 1 dargestellten Ausführungsbeispiel sind drei dieser Schadgaseinlässe 8 zu erkennen, der vierte Schadgaseinlass 8 ist in dieser Ansicht durch den mittig angeordneten verdeckt. Hinter dem mittig angeordneten Schadgaseinlass 8 ist eine Revisionsöffnung mit einem Deckel 7 zu erkennen, d. h. die Schadgaseinlässe 8 sind konzentrisch um den Deckel 7 auf einem strömungsoptimierten Kreis angeordnet. Somit liegen die Schadgaseinlässe 8 rotationssymmetrisch um eine Längsachse bzw. Mittelpunktsachse des Übergangs des sich verjüngend ausgestalteten Bereichs 9 zu dem 90°-Bogen 10. Durch die durch den Deckel 7 verschlossene Öffnung können in weiteren Ausführungsbeispielen auch Messinstrumente oder als "Scraper" bezeichnete Schaber bzw. Kratzer zum Reinigen in einen Innenraum des Reaktorgefäßes eingebracht werden oder die Öffnung kann zu Revisionszwecken genutzt werden. Nach unten an den zylinderförmigen Bereich 5 schließt sich ein sich konisch verjüngend ausgebildeter Bereich 9 des Reaktorgefäßes an. Diesem Konus des Zyklons folgt der 90°-Bogen 10, der einen Übergang zum Anschluss an den Exhaust 11 und somit den Gasauslass bildet. Die Umgebungsgasgemischanschlüsse 12 sind in einem Abstand zur Reaktorplatte 6 tangential angeordnet. Nach einem kurzen, geraden Rohr verlaufen diese Anschlüsse im gezeigten Beispiel in einem 90°-Bogen nach unten, senkrecht zum Untergrund weiter und enden an den Eckventilen 2 mit Federrückstellung, deren Ausgang wiederum parallel zum Untergrund verläuft. An diesen Ausgang ist ein schräg abgeschnittener, gerader Kreiszylinder angeordnet, der als Ansaug- bzw. Einlassstutzen 1 dient und einen Einströmquerschnitt vergrößert. Somit wird ein Einströmen in den Gaseinlass erleichtert. In den senkrechten Rohren können Durchgangsgewinde angeordnet sein, um beispielsweise Messgeräte wie ein Pitotrohr oder andere Volumen- bzw. Geschwindigkeitsmessfühler aufnehmen zu können. Die Größe dieser Gewinde ist in der Regel anlagenabhängig gewählt, sie sind aber normiert, um mit einem Blinddeckel luftdicht verschraubt zu werden.

In dem in Figur 1 dargestellten Ausführungsbeispiel ist die Vorrichtung stehend angeordnet, d. h. das Reaktorgefäß ist derart orientiert, dass eine Hochachse senkrecht zum Untergrund steht. Das Reaktorgefäß selbst weist an seinem oberen, vom Untergrund als weiter entfernten Ende, den zylindrischen Bereich 5 auf, der in Richtung des Untergrunds in den kegelstumpfförmigen, sich verjüngenden Teil 9 übergeht. Die Vorrichtung selbst endet am Exhaust 11 in einer (aus Übersichtsgründen nicht dargestellten) äußeren Rahmenstruktur, die die Vorrichtung trägt. Die Schadgaseinlässe 8 sind in dem gezeigten Ausführungsbeispiel senkrecht auf der Reaktorplatte 6 angeordnet, können in weiteren Ausführungsbeispielen aber auch unter anderen Winkeln in die Reaktorplatte 6 münden bzw. auch bogenförmig ausgestaltet sein. In der Regel sind die Schadgaseinlässe 8 als KF-Flansche ausgeführt, um sie leicht für einen Transport verschließen zu können und einen normierten Anschluss bereitzustellen.

Durch die in Figur 1 gezeigte Vorrichtung ist eine kostengünstige sowie stabile Abreinigung bzw. Reaktion von Schadgasen möglich. Chemische Verbindungen wie Silan oder Diboran sind von sich aus hoch reaktiv, müssen aber entsprechend unterstützt werden, damit die Verbindung vom gasförmigen Zustand in Staub oder Partikel zerfällt, die dann nachgelagert abgeschieden oder aufgenommen werden können. Mit der vorgestellten Vorrichtung und deren im Folgenden noch näher erläuterten optimierten Strömung kann eine Kontrolle dieses Prozesses sowie dessen Überwachung erreicht werden, die letztlich in gegenüber dem Stand der Technik verbesserte Ergebnisse der Abreinigung münden.

Die Vorrichtung zur Oxidation eines Schadgases in einem gegenüber seiner Umwelt verschließbaren Reaktor ermöglicht ein strömungsoptimiertes Einströmen des Umgebungsgasgemischs, typischerweise Luft. Durch das Einströmen im zylindrischen Bereich 5 tangential zur Mantelfläche und mithilfe des Zyklonprinzips wird ohne einen komplizierten Aufbau eine vergleichsweise lange Verweilzeit im Reaktorgefäß und damit eine gründliche Reaktion ermöglicht. Dafür strömt das Reaktionsgas von der Innenwand des Reaktorgefäßes in einer Art Strudel von definiertem Volumen durch einen kontinuierlichen Gasstrom in Richtung Gasauslass bzw. Exhaust 11. Der Reaktorraum selbst verjüngt sich in Strömungsrichtung konusförmig in Richtung Exhaust 11. Dadurch, dass der Schadgaseinlass 8 an der Stirnseite so orientiert ist, dass die Hochachse bzw. Längsachse der gesamten Vorrichtung senkrecht auf dem Untergrund und somit parallel zur wirkenden Gravitationskraft steht, strömt auch das das Schadgas enthaltende Prozessgas 22 in Richtung der Schwerkraft in das Reaktorgefäß ein, wird von dem Strudel des Zyklons angesaugt und strömt folglich in einer Art Schraubenbewegung bzw. spiralförmiger Bewegung in Richtung Gasauslass. Dabei steht es in ständigem Kontakt mit dem Umgebungsgasgemisch und reagiert mit diesem ohne bei einer exothermen Reaktion Wärme über die Reaktorwand zu verlieren oder durch zu starke Verdünnung eine nötige Mindestkonzentration zu unterschreiten. Das Schadgas reagiert im Inneren des Reaktorgefäßes somit im Idealfall vollständig ab bis kurz vor den Exhaust 11. Durch Regulieren und Einstellen der Volumenströme, was durch eine Ventilsteuerung von Ventilen an dem Gaseinlass und dem Schadgaseinlass 8 durch eine (aus Übersichtsgründen nicht dargestellte) Einrichtung zur Einstellung eines Volumenstroms, beispielsweise einem Computer, erfolgen kann, wird diese exotherme Reaktion idealerweise kontrolliert.

Hierzu kann mittig im Exhauststrom auch ein Temperatursensor 13 angeordnet sein, der fortlaufend die Temperatur misst und als Steuer- bzw. Regelparameter an diese Einrichtung zur Einstellung eines Volumenstroms übermittelt. Zusätzlich kann in dem in Figur 1 dargestellten Ausführungsbeispiel auch vorgesehen sein, dass die Strömungsgeschwindigkeit bzw. der Volumenstrom in mindestens einem Einströmrohr gemessen und auch an die genannte Einrichtung als Steuer- oder Regelparameter übermittelt wird. Bevorzugt erfolgt diese Messung über ein Pitotrohr bzw. eine Staudrucksonde in Strömungsrichtung.

Der Einlass des Umgebungsgasgemischs ist in der in Figur 1 gezeigten Ausführungsform als normiertes Standardrohr ausgeführt, bevorzugt sind das Reaktorgefäß bzw. Reaktionsgefäß und alle Anschlüsse aus Edelstahl ausgeführt und über KF-Flansche (Kleinflansch) oder ISO-Flansche (International Organization for Standardization) an Rohrsystem anschließbar, ohne darauf limitiert zu sein. In weiteren Ausführungsbeispielen kann auch ein Verdichter von der Vorrichtung umfasst sein, um das Umgebungsgasgemisch bzw. das Prozessgas gezielt einströmen zu lassen.

In einer weiteren Ausführungsform weist die Reaktorplatte 6 mindestens zwei Anschlüsse auf, von denen einer der Schadgaseinlass 8 ist und der andere zum Einführen eines Heizelements dient, das zu einer Oberflächenreaktion von Schadgasen mit einer Reaktionstemperatur oberhalb der Umgebungstemperatur, insbesondere der Zimmertemperatur von 20 °C hat. Damit startet eine Voreinstellung oder Regelung der exothermen Reaktion an dieser Oberfläche und bei ausreichend hohen Temperaturen innerhalb des Reaktorgefäßes, d. h. des Fliehkraftabscheiders bzw. Zyklons, kann das Heizelement deaktiviert werden und die Reaktion wird über den Temperatursensor 13 im Exhaust 11 und bzw. oder einen weiteren, im Innenraum des Reaktorgefäßes angeordneten Temperaturdetektor überwacht. Der Gasauslass ist dabei der Reaktorplatte 6, die auch als Reaktordeckel bezeichnet werden kann, gegenüberliegend angeordnet an der Stelle des sich verjüngen Bereichs 9, an der dieser einen geringsten Durchmesser aufweist.

Bei einem entsprechenden Verfahren zur Oxidation von Schadgasen wie Silan, SiH₄, oder Diboran, B₂H₆, strömt also zunächst das Reaktionsgas über die entsprechenden Einlässe in das Reaktorgefäß und es bildet sich eine Zyklon-Schraubenbewegung im Reaktorgefäß aus, die vom Eintritt in den Innenraum des Reaktorgefäßes bis zum Gasauslass reicht. Die Zyklon-Schraubenbewegung wird, insbesondere auch durch den sich verjüngenden Teil 9, in Richtung des Gasauslasses 11 beschleunigt. Durch den Gaseinlass wird, beispielsweise durch einen Ventilator, Umgebungsluft als Prozessgas eingesaugt. Bevorzugt durch Mitreißen bzw. ansaugen durch diese Schraubenbewegung strömt das Schadgas über den Schadgaseinlass 8 ein, der beispielsweise an einer Innenseite der Zyklen-Schraubbewegung positioniert ist. Das Schadgas führt an dieser Innenseite ebenfalls eine Schraubbewegung gleich der des Reaktionsgases aus, infolge der sich eine Kontaktzone in dem Reaktorgefäß ausbildet, in der das Schadgas und das Reaktionsgas 21 als Reaktionspartner reagieren, bevor es zu einer Vermischung unter die Mindestkonzentration kommt, bei Silan beispielsweise kleiner als 2 Prozent Volumenanteil am Gasgemisch (dabei wird eine Mindestkonzentration des Schadgases aufrechterhalten).

Durch das Mischen der Reaktionspartner startet eine (Ketten-)Reaktion, die über die Strecke der Zyklon-Schraubbewegung dazu führt, dass das Schadgas vollständig abreagiert, so dass nach der Reaktion aus den beiden Reaktionspartnern ein Gasstrom aus dem Reaktionsgas mit einer Beladung, bevorzugt einer pulverähnliche oder staubähnlichen Substanz, geworden ist. Hierbei wird das Gasgemisch insbesondere nach Eintritt in den Konus beschleunigt. Dieser Gasstrom kann aufgenommen, abgeschieden, gefiltert oder ausgewaschen werden, wozu am Exhaust 11 ein Auffangbehälter und bzw. oder im Exhaust 11 ein entsprechendes Filterelement oder ein Wäscher angebracht sein kann. Beispielsweise können abreagierte Reaktionsprodukte als Schwebstoff gefiltert oder mittels Durchleiten durch den Wäscher ausgewaschen werden. Bevorzugt wird eine Reinstsubtanz gefiltert und ausgeblasen in den Auffangbehälter zur Wiederverwertung und Weiterverarbeitung. Wenn die sich ausbildende Zyklonbewegung stabil ist, was beispielsweise über eine Zeitkonstante und bzw. oder durch Auswertung von Messgrößen wie Differenzdruck, Volumenstrom oder Strömungsgeschwindigkeit erfolgen kann, wird das Einströmen durch Ansaugen des Prozessgases über den Schadgaseinlass 8 ermöglicht. Das Prozessgas samt Schadgas, beispielsweise Silan als Restladung von Gasflaschen, kann gegebenenfalls auch durch Massflowcontroller noch begrenzt werden. Typischerweise sollte das Schadgas jedoch beim Eintritt in die Kontaktzone eine Mindestkonzentration aufweisen, die, abhängig vom Schadgas ist, und einer kritischen Menge für eine selbständige Kettenreaktion entspricht. Während der Reaktion wird in der Regel Wärme frei, die wiederum die stattfindende Reaktion unterstützt und so das vollständige Abreagieren begünstigt. Dies wird durch die Mindestkonzentration und die Verweilzeit im Reaktorgefäß ermöglicht, aber auch durch die mangelnde Verdünnung der Reaktionspartner, die lediglich in der Kontaktzone im Inneren des Reaktorgefäßes durchmischt werden. Nach der Reaktion ist aus den beiden Reaktionspartnern ein Gasstrom bestehend aus Luft mit einer Beladung von Siliziumdioxid geworden, das durch die Filtereinheit bei Bedarf abgeschieden werden kann. Die Filtereinheit kann diese Beladung nachfolgend abblasen in einen angeschlossenen Auffangbehälter, so dass eine Reinstsubstanz gesammelt wird und ein Filter der Filtereinheit mehrfach beladen sowie die Luft ohne Schadstoffbelastung an die Umwelt abgegeben werden kann.

Mittels eines Heizelements bzw. einer Wärmequelle kann vorgesehen sein, die beschriebene (Ketten-)Reaktion beim Mischen der Reaktionspartner zu starten und, wenn die Reaktion stabilisiert ist (was beispielsweise nach einer vorherbestimmten Zeit der Fall sein kann oder durch ein Erfassen von Prozessparametern wie der Temperatur des Gasstroms und Auswerten dieser Prozessparameter erfolgen kann, wird das Heizelement abgeschaltet. Das Heizelement kann hierzu in der Kontaktzone positioniert sein oder in unmittelbarer Nähe des Schadgaseintritts, d. h. nahe bei dem Schadgaseinlass 8 positioniert (typischerweise nicht mehr als einen Durchmesser des jeweiligen Schadgaseinlasses 8 von einem Rand des Schadgaseinlasses 8 entfernt), bzw. im Schadgaseinlass 8 selbst. Bei Diboran wird typischerweise noch diese zusätzliche Heizeinrichtung verwendet, um die Reaktion zu starten, da Diboran selbst nicht selbständig mit Sauerstoff reagiert. Selbst die Reaktion in Gang kommt, kann die Heizeinrichtung auch abgeschaltet werden. Auch wenn beispielhaft Silan und Diboran genannt sind, kann die Vorrichtung und das Verfahren natürlich auch für weitere Schadgase eingesetzt werden.

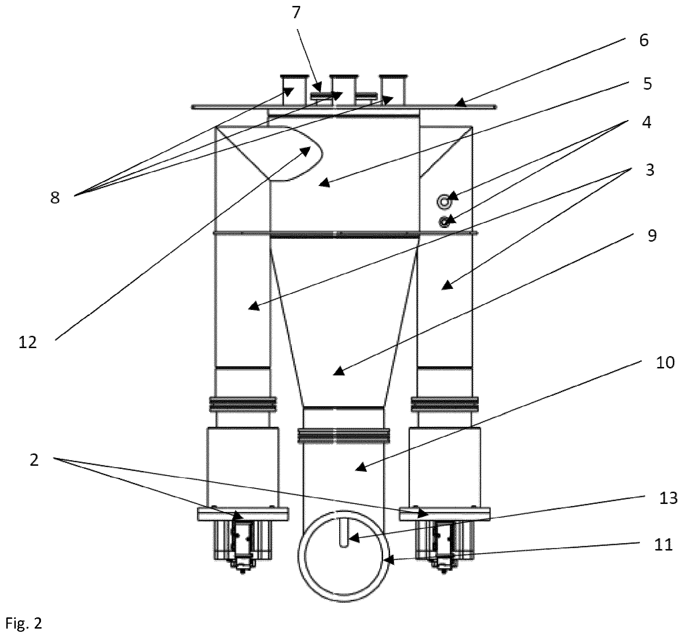

Figur 2 zeigt in einer schematischen seitlichen Ansicht, die nun jedoch gegenüber der in Figur 1 gezeigten Ansicht um 90° gedreht ist, die Vorrichtung von hinten ohne stützende Strukturen. Wiederkehrende Merkmale sind in dieser Figur wie auch in den folgenden Figuren mit identischen Bezugszeichen versehen. Insbesondere der mittig im Exhauststrom angeordnete Temperatursensor 13 ist nun klarer zu erkennen. Wie zuvor umfasst die Vorrichtung also einen Zyklon bzw. Fliehkraftabscheider mit mindestens zwei Einlässen für je einen Reaktionspartner, die während der Verweilzeit im Reaktor zu weniger schädlichen oder wiederverwendbaren Substanzen abreagieren und die Umwelt so nicht mehr gefährden. Der Prozess kann zudem durch Sicherheitseinrichtungen gegenüber der Umgebung im Havariefall abschließbar sein und ist reproduzierbar, regelbar und überwachbar. Als Sicherheitseinrichtungen kann hierzu mindestens ein federrückgestelltes Ventil, Sicherheitsventil, Endlagenschalter oder generell ein im unbetätigten Fall geschlossenes Ventil vorgesehen sein bzw. typischerweise werden mehrere der genannten Sicherheitseinrichtungen verwendet wobei auch unterschiedliche Typen miteinander in Kombination zum Einsatz kommen können.

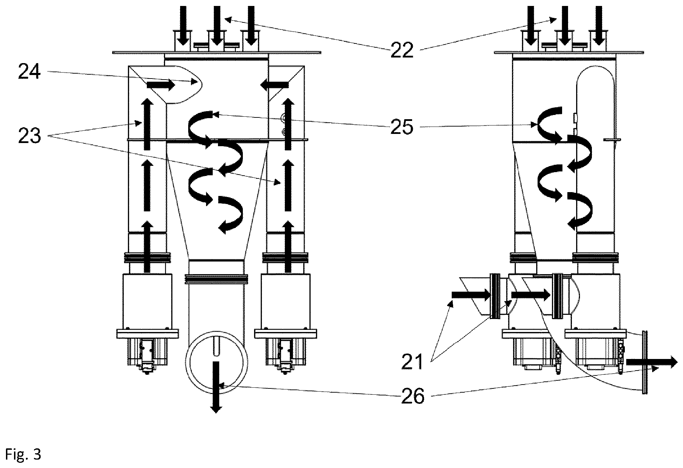

Figur 3 zeigt in einer schematischen Ansicht den Strömungsverlauf (im linken Teil der Figur in einer Figur 1 entsprechenden Ansicht, im rechten Teil der Figur in einer Figur 2 entsprechenden Ansicht). Das Reaktionsgas 21, beispielsweise ein Umgebungsgasgemisch tritt über die Ansaug- bzw. Einlassstutzen 1 in das Reaktorgefäß ein. Eine Einströmung 23 wird in den Einströmröhren 3 bis zum Eintritt 24 in das Reaktorgefäß geführt, in dem sich eine Zyklon-Schraubbewegung 25 ausbildet, die das Schadgas über die Schadgaseinlässe 8 einzieht. Der Gasstrom strömt über den 90°-Bogen 10 als Exhauststrom 26 in den Exhaust 11.

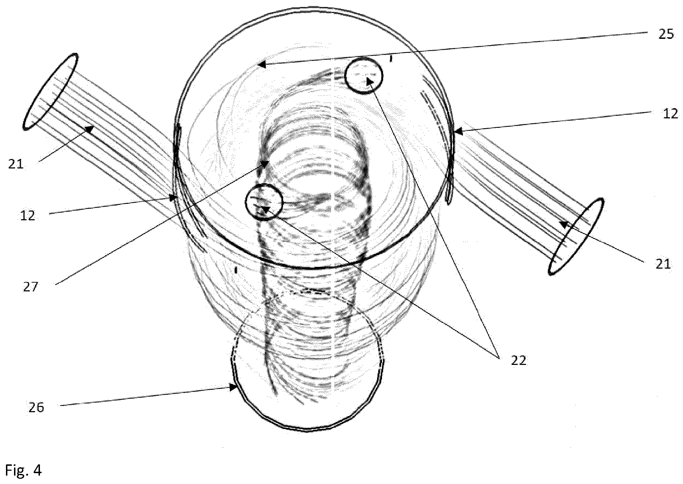

Wie in Figur 4 in einer schematischen perspektivischen Darstellung gezeigt, tritt das Reaktionsgas 21 über die Umgebungsgasgemischanschlüsse 12 tangential in das Reaktorgefäß ein. Im Inneren bildet sich dann die Zyklon-Schraubbewegung 25 aus, die schraubenförmig bzw. in konstanter Drehung nach unten bis zum Austritt, dem 90°-Bogen 10 und dem Exhaust 11, als Abgasstrom 26 strömt. Die Zyklon-Schraubbewegung 25 bzw. Zyklonströmung zieht das Schadgas bzw. das Prozessgas 22 über die Schadgaseinlässe 8 ein und zwischen beiden bildet sich die Kontaktzone 27. In Figur 4 nehmen die dichteren Linien in Richtung Abgasstrom ab, was die Mindestkonzentrationsabnahme, also das Abreagieren, anzeigt.

Lediglich in den Ausführungsbeispielen offenbarte Merkmale der verschiedenen Ausführungsformen können miteinander kombiniert und einzeln beansprucht werden.

## Patentansprüche

1. Vorrichtung zum Abreinigen eines mindestens ein Schadgas enthaltendes Prozessgases (22), mit
einem als Fliehkraftabscheider ausgebildeten Reaktorgefäß, das einen zylinderförmiger Bereich (5) und einen sich verjüngenden Bereich (9) aufweist und in das Sauerstoff oder ein Sauerstoff enthaltendes Gas als Reaktionsgas (21) in mindestens einen, an dem zylinderförmigen Bereich (5) angeordneten Gaseinlass (1, 2, 3, 12) einführbar und durch mindestens einen, an dem sich verjüngenden Bereich (9) angeordneten Gasauslass (10, 11) abführbar ist, wobei
der mindestens eine Gaseinlass (1, 2, 3, 12) angeordnet und ausgebildet ist, einen definierten Volumenstrom des Reaktionsgases (21) tangential zu einer Mantelfläche des zylinderförmigen Bereichs (5) in das Reaktorgefäß einzuleiten, und
einem an dem zylinderförmigen Bereich (5) angeordneten Schadgaseinlass (8), der ausgebildet ist, einen definierten Volumenstrom des mindestens ein Schadgas enthaltenden Prozessgases (22) in das Reaktorgefäß einzuleiten, so dass
das mindestens eine Schadgas und das Reaktionsgas (21) in Richtung des Gasauslasses (10, 11) miteinander vermischt werden und auf dem Weg durch das Reaktorgefäß miteinander chemisch reagieren und
der Gasauslass (10, 11) angeordnet und ausgebildet ist, nicht bei der chemischen Reaktion umgesetztes Prozessgas und Reaktionsprodukte der chemischen Reaktion aus dem Reaktorgefäß abzuleiten, wobei der Schadgaseinlass (8) an einer Stirnseite (6) des zylinderförmigen Bereichs (5) des Reaktorgefäßes angeordnet ist, wobei der Schadgaseinlass dem Gasauslass (10, 11) gegenüberliegend angeordnet ist und ausgebildet ist, das Schadgas (22) rotationssymmetrisch zu einer Längsachse des Gasauslasses (10, 11) in das Reaktorgefäß einzuleiten, **gekennzeichnet durch** eine Einrichtung zur Einstellung des definierten Volumenstroms, die eingerichtet ist, den definierten Volumenstrom des mindestens ein Schadgas enthaltenden Prozessgases (22) und den definierten Volumenstrom des Reaktionsgases (21) vor dem Einführen in das Reaktorgefäß einzustellen.

2. Vorrichtung nach Anspruch 1, **dadurch gekennzeichnet, dass** ein Temperatursensor (13) an dem oder in dem Gasauslass (10, 11) und/oder ein Strömungsgeschwindigkeitssensor in dem oder an dem mindestens Gaseinlass (1, 2, 3, 12) oder dem Schadgaseinlass (8) angeordnet ist/sind.

3. Vorrichtung nach einem der vorhergehenden Ansprüche, **dadurch gekennzeichnet, dass** zum Unterstützen der chemischen Reaktion eine Heizeinrichtung in dem oder an dem Reaktorgefäß angeordnet ist.

4. Vorrichtung nach einem der vorhergehenden Ansprüche, **dadurch gekennzeichnet, dass** der sich verjüngende Bereich (9) des Reaktorgefäßes als sich konisch verjüngender Bereich ausgebildet ist.

5. Vorrichtung nach einem der vorhergehenden Ansprüche, **dadurch gekennzeichnet, dass** der Gasauslass (10, 11) bogenförmig gekrümmt ausgebildet ist, vorzugsweise um 90° bogenförmig gekrümmt ausgebildet ist.

6. Vorrichtung nach einem der vorhergehenden Ansprüche, **dadurch gekennzeichnet, dass** abnehmbar anbringbar an dem Gasauslass (10, 11) ein Filterelement, ein Wäscher und/ oder ein Auffangbehälter für Reaktionsprodukte angeordnet ist.

7. Verfahren zum Abreinigen eines mindestens ein Schadgas enthaltendes Prozessgas, bei dem
in ein als Fliehkraftabscheider ausgebildetes Reaktorgefäß, das einen zylinderförmigen Bereich (5) und einen sich verjüngenden Bereich (9) aufweist, über mindestens einen, an dem zylinderförmigen Bereich (5) angeordneten Gaseinlass (1, 2, 3, 12) ein definierter Volumenstrom von Sauerstoff oder eines Sauerstoff enthaltenden Gases als Reaktionsgas (21) tangential zu einer Mantelfläche des zylinderförmigen Bereichs (5) in das Reaktorgefäß eingeleitet wird, und
über einen an dem zylinderförmigen Bereich (5) angeordneten Schadgaseinlass (8) ein definierter Volumenstrom des das Schadgas enthaltenden Prozessgases (22) in das Reaktorgefäß eingeleitet wird, wobei
das Schadgas (22) und das Reaktionsgas (21) miteinander vermischt werden, auf dem Weg durch das Reaktorgefäß miteinander chemisch reagieren und durch den Gasauslass (10, 11) aus dem Reaktorgefäß nicht bei der chemischen Reaktion umgesetztes Prozessgas und Reaktionsprodukte der chemischen Reaktion abgeleitet werden, wobei der Schadgaseinlass (8) an einer Stirnseite (6) des zylinderförmigen Bereichs (5) des Reaktorgefäßes angeordnet ist und dass der Schadgaseinlass (8) dem Gasauslass (10, 11) gegenüberliegend angeordnet ist und ausgebildet ist, das Schadgas (22) rotationssymmetrisch zu einer Längsachse des Gasauslasses (10, 11) in das Reaktorgefäß einzuleiten.

## Claims

1. A device for purifying a process gas (22) containing at least one pollutant gas, with
a reactor vessel which is designed as a centrifugal separator and which has a cylindrical region (5) and a tapering region (9) and into which oxygen or an oxygen-containing gas can be introduced as a reaction gas (21) into at least one gas inlet (1, 2, 3, 12) arranged on the cylindrical region (5) and can be discharged through at least one gas outlet (10, 11) arranged on the tapering region (9), wherein
the at least one gas inlet (1, 2, 3, 12) is arranged and formed to introduce a defined volumetric flow of the reaction gas (21) into the reactor vessel tangentially to a circumferential surface of the cylindrical region (5), and
a pollutant gas inlet (8) which is arranged on the cylindrical region (5) and is designed to introduce a defined volumetric flow of the process gas (22) containing at least one pollutant gas into the reactor vessel, so that
the at least one pollutant gas and the reaction gas (21) are mixed with each other in the direction of the gas outlet (10, 11) and chemically react with each other on their way through the reactor vessel, and
the gas outlet (10, 11) is arranged and configured to discharge process gas that has not undergone chemical reaction and reaction products of the chemical reaction from the reactor vessel, wherein the pollutant gas inlet (8) is arranged on an end face (6) of the cylindrical region (5) of the reactor vessel, wherein the pollutant gas inlet is arranged opposite the gas outlet (10, 11) and is configured to introduce the pollutant gas (22) into the reactor vessel in a rotationally symmetrical manner relative to a longitudinal axis of the gas outlet (10, 11) into the reactor vessel, **characterised by** a device for adjusting the defined volumetric flow, which is configured to adjust the defined volumetric flow of the process gas (22) containing at least one pollutant gas and the defined volumetric flow of the reaction gas (21) before introduction into the reactor vessel.

2. The device according to claim 1, **characterised in that** a temperature sensor (13) is/are arranged on or in the gas outlet (10, 11) and/or a flow velocity sensor is/are arranged in or on at least the gas inlet (1, 2, 3, 12) or the pollutant gas inlet (8).

3. The device according to any one of the preceding claims, **characterised in that** a heating device is arranged in or on the reactor vessel for supporting the chemical reaction.

4. The device according to any one of the preceding claims, **characterised in that** the tapering region (9) of the reactor vessel is formed as a conically tapering region.

5. The device according to one of the preceding claims, **characterised in that** the gas outlet (10, 11) is curved in an arcuate manner, preferably curved by 90°.

6. The device according to any one of the preceding claims, **characterised in that** a filter element, a scrubber and/or a collecting container for reaction products is removably attachable to the gas outlet (10, 11).

7. A method for purifying a process gas containing at least one pollutant gas, wherein
a defined volumetric flow of oxygen or of an oxygen-containing gas as reaction gas (21) is introduced tangentially to a circumferential surface of the cylindrical region (5) into the reactor vessel via at least one gas inlet (1, 2, 3, 12) arranged on the cylindrical region (5), which reactor vessel is configured as a centrifugal separator and has a cylindrical region (5) and a tapering region (9), and
a defined volumetric flow of the process gas (22) containing the pollutant gas is introduced into the reactor vessel via a pollutant gas inlet (8) arranged on the cylindrical region (5), wherein
the pollutant gas(22) and the reaction gas (21) are mixed together, react chemically with each other on their way through the reactor vessel, and process gas that has not been converted in the chemical reaction and reaction products of the chemical reaction are discharged from the reactor vessel through the gas outlet (10, 11), wherein the pollutant gas inlet (8) is arranged on an end face (6) of the cylindrical region (5) of the reactor vessel and the pollutant gas inlet (8) is arranged opposite the gas outlet (10, 11) and is configured to introduce the pollutant gas (22) into the reactor vessel in a rotationally symmetrical manner relative to a longitudinal axis of the gas outlet (10, 11).

## Revendications

1. Dispositif pour la purification d'un gaz de processus (22) contenant au moins un gaz nocif, avec
une cuve de réacteur conçue sous forme de séparateur centrifuge, qui présente une zone cylindrique (5) et une zone se rétrécissant (9) et dans laquelle de l'oxygène ou un gaz contenant de l'oxygène peut être introduit comme gaz de réaction (21) dans au moins une entrée de gaz (1, 2, 3, 12) agencée sur la zone cylindrique (5) et peut être évacué par au moins une sortie de gaz (10, 11) agencée sur la zone (9) se rétrécissant,
l'au moins une entrée de gaz (1, 2, 3, 12) étant agencée et conçue pour introduire un flux volumique défini du gaz de réaction (21) dans la cuve du réacteur, tangentiellement à une surface d'enveloppe de la zone cylindrique (5), et
une entrée de gaz nocif (8) agencée sur la zone cylindrique (5), qui est conçue pour introduire un flux volumique défini du gaz de processus (22) contenant au moins un gaz nocif dans la cuve du réacteur, de sorte que
l'au moins un gaz nocif et le gaz de réaction (21) sont mélangés l'un à l'autre en direction de la sortie de gaz (10, 11) et réagissent chimiquement l'un avec l'autre lors de leur passage à travers la cuve de réacteur et
la sortie de gaz (10, 11) est agencée et conçue pour évacuer de la cuve de réacteur le gaz de processus n'ayant pas réagi lors de la réaction chimique et les produits de réaction de la réaction chimique, l'entrée de gaz nocif (8) étant agencée sur une face frontale (6) de la zone cylindrique (5) de la cuve de réacteur, l'entrée de gaz nocif étant agencée et conçue en face de la sortie de gaz (10, 11) pour introduire le gaz nocif (22) dans la cuve du réacteur avec une symétrie de rotation par rapport à un axe longitudinal de la sortie de gaz (10, 11), **caractérisé par** un dispositif de réglage du débit volumique défini, qui est conçu pour régler le débit volumique défini du gaz de processus (22) contenant au moins un gaz nocif et le débit volumique défini du gaz de réaction (21) avant l'introduction dans la cuve du réacteur.

2. Dispositif selon la revendication 1, **caractérisé en ce qu'**un capteur de température (13) est agencé sur ou dans la sortie de gaz (10, 11) et/ou un capteur de vitesse d'écoulement est agencé sur ou dans l'au moins une entrée de gaz (1, 2, 3, 12) ou l'entrée de gaz nocif (8).

3. Dispositif selon l'une quelconque des revendications précédentes, **caractérisé en ce que**, pour assister la réaction chimique, un dispositif de chauffage est agencé sur ou dans la cuve du réacteur.

4. Dispositif selon l'une quelconque des revendications précédentes, **caractérisé en ce que** la zone se rétrécissant (9) de la cuve du réacteur est conçue sous la forme d'une zone de rétrécissement conique.

5. Dispositif selon l'une quelconque des revendications précédentes, **caractérisé en ce que** la sortie de gaz (10, 11) est incurvée, de préférence incurvée sur 90° en forme d'arc.

6. Dispositif selon l'une des revendications précédentes, **caractérisé en ce qu'**un élément filtrant, un laveur et/ou un récipient de collecte des produits de réaction est agencé de manière amovible et montable sur la sortie de gaz (10, 11).

7. Procédé de purification d'un gaz de processus contenant au moins un gaz nocif, dans lequel
dans une cuve de réacteur conçue sous la forme d'un séparateur centrifuge, qui présente une zone cylindrique (5) et une zone (9) se rétrécissant, un flux volumique défini d'oxygène ou d'un gaz contenant de l'oxygène est introduit dans la cuve de réacteur, par au moins une entrée de gaz (1, 2, 3, 12) agencée sur la zone cylindrique (5) en tant que gaz de réaction (21), tangentiellement à une surface d'enveloppe de la zone cylindrique (5), et
un flux volumique défini du gaz de processus (22) contenant le gaz nocif est introduit dans la cuve du réacteur par l'intermédiaire d'une entrée de gaz nocif (8) agencée sur la zone de forme cylindrique (5), dans lequel
le gaz nocif (22) et le gaz de réaction (21) sont mélangés l'un à l'autre, réagissent chimiquement l'un à l'autre sur le trajet à travers la cuve du réacteur et le gaz de processus n'ayant pas réagi lors de la réaction chimique et les produits de réaction de la réaction chimique sont évacués de la cuve du réacteur par la sortie de gaz (10, 11), l'entrée de gaz nocif (8) étant agencée sur une face frontale (6) de la zone cylindrique (5) de la cuve du réacteur et l'entrée de gaz nocif (8) est agencée en face de la sortie de gaz (10, 11) et est conçue pour introduire le gaz nocif (22) dans la cuve du réacteur avec une symétrie de rotation par rapport à un axe longitudinal de la sortie de gaz (10, 11).
